# EUROPEAN PATENT APPLICATION

(11) **EP 4 105 002 A1**
(43) Date of publication of application: **21.12.2022**
(21) Application number: 22179323.5
(22) Date of filing: 15.06.2022
(51) Int. Cl.: B29C 64/129, B29C 64/205, B33Y 10/00, B33Y 30/00, B29C 64/227

(54) **PEELING DEVICE FOR ADDITIVE MANUFACTURING**

(30) Priority: 16.06.2021 US 202163211054 P; 10.06.2022 US 202217837563
(71) Applicant: General Electric Company, Schenectady, NY 12345 (US)
(72) Inventor: Dubelman, Meredith, Liberty Township (US); Steele, William, Lawrenceburg (US); Barnhill, Christopher, Cincinatti (US); Yang, Xi, Mason (US)
(74) Representative: Hafner & Kohl PartmbB

(57) **Abstract**

An additive manufacturing apparatus (10) includes a support plate (14) and a stage (18) configured to hold a component (12) formed of one or more cured layers of a resin (R). An actuator assembly (38) is configured to change a relative position of the stage (18) relative the support plate (14). A radiant energy device (20) is positioned opposite to the stage (18) such that it is operable to generate and project radiant energy in a pattern. A peeling device (64) is positioned downstream of the window (16). The actuator assembly (38) is configured to move the stage (18) simultaneously with a resin support (26) over the peeling device in an X-axis direction.

## Description

### CROSS-REFERENCE TO RELATED APPLICATION

The present application claims priority to United States Provisional Patent Application Serial No. 63/211,054, filed on June 16, 2021 and to United States Patent Application Serial No. 17/837,161 filed on June 10, 2022.

### FIELD

The present subject matter relates generally to an additive manufacturing apparatus, and more particularly to assemblies for separating additively manufactured components from a resin support of the additive manufacturing apparatus.

### BACKGROUND

Additive manufacturing is a process in which material is built up layer-by-layer to form a component. Stereolithography (SLA) is a type of additive manufacturing process, which employs a tank of radiant-energy curable photopolymer "resin" and a curing energy source such as a laser. Similarly, Digital Light Processing (DLP) three-dimensional (3D) printing employs a two-dimensional image projector to build components one layer at a time. For each layer, the energy source draws or flashes a radiation image of the cross section of the component onto the surface of the resin. Exposure to the radiation cures and solidifies the pattern in the resin and joins it to a previously-cured layer.

In some instances, additive manufacturing may be accomplished through a "tape casting" process. In this process, a resin is deposited onto a flexible radiotransparent resin support, such as a tape or foil, that is fed out from a supply reel to a build zone. Radiant energy is produced from a radiant energy device and directed through a window to cure the resin to a component that is supported by a stage in the build zone. Once the curing of the first layer is complete, the stage and the resin support are separated from one another. The resin support is then advanced and fresh resin is provided to the build zone. In turn, the first layer of the cured resin is placed onto the fresh resin and cured through the energy device to form an additional layer of the component. Subsequent layers are added to each previous layer until the component is completed.

During the tape casting process, a newly formed layer of the component and the resin support are separated between each sequential layer of the component. During separation of the newly formed layer from the resin support, component breakage due to various forces that occur during the separation process. Accordingly, it may be beneficial for the additive manufacturing apparatus to include a peeling device to minimize delamination or breakage of the component.

### BRIEF DESCRIPTION

Aspects and advantages of the present disclosure will be set forth in part in the following description, or may be obvious from the description, or may be learned through practice of the present disclosure.

In some embodiments of the present disclosure, an additive manufacturing apparatus is provided. The additive manufacturing apparatus includes a support plate supporting a window. A stage is configured to hold a component formed of one or more cured layers of a resin. An actuator assembly is configured to change a relative position of the stage relative to the support plate. A radiant energy device is positioned opposite to the stage such that it is operable to generate and project radiant energy in a pattern. A peeling device is positioned downstream of the window. The actuator assembly is configured to move the stage simultaneously with a resin support over the peeling device in an X-axis direction.

In some embodiments of the present disclosure, a method of operating an additive manufacturing apparatus. The method includes depositing a first layer of a resin onto a resin support. The method also includes moving a stage in a Z-axis direction such that a working surface contacts the first layer of the resin. In addition, the method includes curing a first portion of the resin with the stage and the resin support in a first position relative to a window by applying radiant energy from a radiant energy device through the window. Lastly, the method includes translating the stage and the resin support along a peeling device in an X-axis direction to separate a component from the resin support.

In some embodiments of the present disclosure, an additive manufacturing apparatus is provided. The additive manufacturing apparatus includes a support plate defining a window. A stage is configured to hold a component formed from one or more cured layers of a resin. A radiant energy device positioned opposite to the stage such that it is operable to generate and project radiant energy in a pattern. A peeling device is positioned downstream of the window. The stage is configured to move simultaneously with a resin support over the peeling device in an X-axis direction. An actuator assembly is configured to move the component in the X-axis direction generally parallel to the support plate and in a Y-axis direction that is generally perpendicular to the X-axis direction.

These and other features, aspects, and advantages of the present disclosure will become better understood with reference to the following description and appended claims. The accompanying drawings, which are incorporated in and constitute a part of this specification, illustrate embodiments of the present disclosure and, together with the description, serve to explain the principles of the present disclosure.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures.
FIG. 1 is a schematic side view of an additive manufacturing apparatus in accordance with various aspects of the present disclosure;
FIG. 2 is a front perspective view of the additive manufacturing apparatus in accordance with various aspects of the present disclosure;
FIG. 3 is a front perspective view of the additive manufacturing apparatus having a peeling device in accordance with various aspects of the present disclosure;
FIG. 4 is a front perspective view of the additive manufacturing apparatus with the peeling device including a resin support interaction device in accordance with various aspects of the present disclosure;
FIG. 5 is a front perspective view of the additive manufacturing apparatus having the peeling device including a retaining roller in accordance with various aspects of the present disclosure;
FIG. 6 is a method of operating the manufacturing apparatus in accordance with various aspects of the present disclosure;
FIG. 7 is a front perspective view of the additive manufacturing apparatus with a stage in a first position in accordance with various aspects of the present disclosure;
FIG. 8 is a front perspective view of the additive manufacturing apparatus with the stage in a second position in accordance with various aspects of the present disclosure;
FIG. 9 is a front perspective view of the additive manufacturing apparatus having a first portion of the stage positioned downstream of the peeling device in accordance with various aspects of the present disclosure;
FIG. 10 is a front perspective view of the additive manufacturing apparatus having a second portion of the stage positioned downstream of the peeling device in accordance with various aspects of the present disclosure;
FIG. 11 is a front perspective view of the additive manufacturing apparatus having the stage positioned downstream of the peeling device in accordance with various aspects of the present disclosure; and
FIG. 12 depicts an exemplary computing system for an additive manufacturing apparatus in accordance with various aspects of the present disclosure.

Repeat use of reference characters in the present specification and drawings is intended to represent the same or analogous features or elements of the present disclosure.

### DETAILED DESCRIPTION

Reference will now be made in detail to present embodiments of the present disclosure, one or more examples of which are illustrated in the accompanying drawings. The detailed description uses numerical and letter designations to refer to features in the drawings. Like or similar designations in the drawings and description have been used to refer to like or similar parts of the present disclosure.

As used herein, the terms "first," "second," and "third" may be used interchangeably to distinguish one component from another and are not intended to signify a location or importance of the individual components. The terms "coupled," "fixed," "attached to," and the like refer to both direct coupling, fixing, or attaching, as well as indirect coupling, fixing, or attaching through one or more intermediate components or features, unless otherwise specified herein. The terms "upstream" and "downstream" refer to the relative direction with respect to a resin support movement along the manufacturing apparatus. For example, "upstream" refers to the direction from which the resin support moves, and "downstream" refers to the direction to which the resin support moves. The term "selectively" refers to a component's ability to operate in various states (e.g., an ON state and an OFF state, a first state and a second state, etc.) based on manual and/or automatic control of the component.

The singular forms "a," "an," and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about," "approximately," "generally," and "substantially," is not to be limited to the precise value specified. In at least some instances, the approximating language may correspond to the precision of an instrument for measuring the value, or the precision of the methods or apparatus for constructing or manufacturing the components and/or systems. For example, the approximating language may refer to being within a ten percent margin.

Moreover, the technology of the present application will be described in relation to exemplary embodiments. The word "exemplary" is used herein to mean "serving as an example, instance, or illustration." Any embodiment described herein as "exemplary" is not necessarily to be construed as preferred or advantageous over other embodiments. Additionally, unless specifically identified otherwise, all embodiments described herein should be considered exemplary.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

As used herein, the term "and/or," when used in a list of two or more items, means that any one of the listed items can be employed by itself, or any combination of two or more of the listed items can be employed. For example, if a composition or assembly is described as containing components A, B, and/or C, the composition or assembly can contain A alone; B alone; C alone; A and B in combination; A and C in combination; B and C in combination; or A, B, and C in combination.

The present disclosure is generally directed to an additive manufacturing apparatus that implements various manufacturing processes such that successive layers of material(s) are provided on each other to "build-up," layer-by-layer, a three-dimensional component. The successive layers generally cure together to form a monolithic component which may have a variety of integral sub-components. Although additive manufacturing technology is described herein as enabling the fabrication of complex objects by building objects point-by-point, layer-by-layer, variations of the described additive manufacturing apparatus and technology are possible and within the scope of the present subject matter.

The additive manufacturing apparatus can include a support plate, a window supported by the support plate, and a stage moveable relative to the window. The additive manufacturing apparatus can further include a resin that is deposited as a layer having a desired thickness onto a resin support (such as a foil, tape, or other flexible resin support) that is fed out from a supply reel. A stage lowers onto the resin such that a working surface defined by one of a surface of the stage or a surface of the work in process component is positioned such that the working surface either is just touching the resin or compressing it between the resin support and the stage and defining a layer thickness. Radiant energy is used to cure the resin through the resin support. Once the curing of the first layer is complete, the stage is retracted, taking the cured material with it. The resin support is then advanced to expose a fresh clean section, ready for additional resin to be deposited in a subsequent, new cycle.

In some instances, the stage is moveable through an actuator assembly. The actuator assembly may be capable of moving the stage away from the window (e.g., a Z-axis direction) and/or along the travel direction of the resin support (e.g., an X-axis direction). In such instances, the stage may be lowered onto the resin and the radiant energy device may cure a first portion of resin. The actuator assembly then may move the stage simultaneously with the resin support while maintaining contact with the resin support from a first position to a second position. Once the stage and the resin support are moved to the second position, the radiant energy device may cure a second portion of the resin.

In various examples, the radiant energy device may move in a third direction (e.g., Y-axis direction) and multiple curing steps may be completed while the stage and the resin support are in a fixed position relative to one another. In other embodiments, the stage may be detached from the resin R and move relative to the resin support before recontacting with the resin R on the resin support. Additionally or alternatively, in some embodiments, the stage and the component may be simultaneously moved from a first position to a second position while the resin support stays generally stationary.

By moving the stage and/or the radiant energy device in various directions, larger components may be produced, which may be accomplished through multiple curing steps with a single layer of the component. The larger components may enhance the capabilities of the manufacturing apparatus by allowing for more diverse part creations and/or reduce the overall packaging of the apparatus.

In some examples, once the layer is complete, a peeling device may be capable of localizing separation between the component and the resin support. For example, the localized separation may begin at a side of the component as the component and the resin support are translated over the peeling device by the actuator assembly. Once the component is released from the resin support, the stage may be moved such that a first portion of a subsequent layer may be cured onto the component. The peeling device provided herein may be useful for components having cross-sectional areas where traditional peeling may cause too much force leading the printed part to delaminate or pieces of the component to fall apart. The peeling device may also be useful for separating layers of fine or small features connecting to larger features of the component as the peeling device may minimize the probability of breakage of the fine features during the separation process.

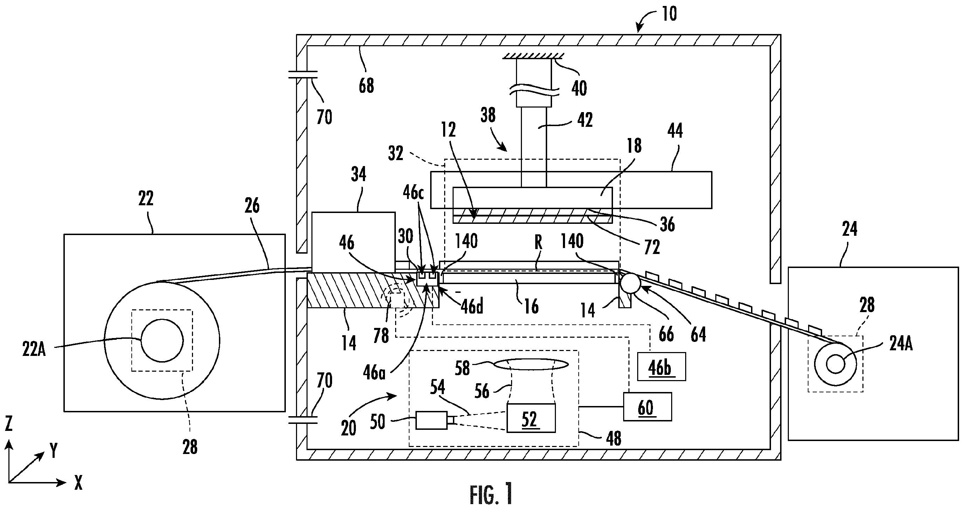

Referring to the drawings wherein identical reference numerals denote the similar elements throughout the various views, FIG. 1 schematically illustrates an example of one type of suitable apparatus 10 for forming a component 12 created through one or more layers of cured resin R. The apparatus 10 can include one or more of a support plate 14, a window 16, a stage 18 that is movable relative to the window 16, and a radiant energy device 20, which, in combination, may be used to form any number (e.g., one or more) of additively manufactured components 12.

In the illustrated example, the apparatus 10 includes a feed module 22, which may include a first roller 22A, and a take-up module 24, which may include a second roller 24A, that are spaced-apart with a resin support 26 extending therebetween. A portion of the resin support 26 can be supported from underneath by the support plate 14 and/or the window 16. Suitable mechanical supports (frames, brackets, etc.) and/or alignment devices may be provided for the rollers 22A, 24A and the support plate 14. The first roller 22A and/or the second roller 24A can be configured to control the speed and direction of the resin support 26 such that the desired tension and speed is maintained in the resin support 26 through a drive system 28. By way of example and not limitation, the drive system 28 can be configured as individual motors associated with the first roller 22A and/or the second roller 24A. Moreover, various components, such as motors, actuators, feedback sensors, and/or controls can be provided for driving the rollers 22A, 24A in such a manner so as to maintain the resin support 26 tensioned between the aligned rollers 22A, 24A and to wind the resin support 26 from the first roller 22A to the second roller 24A.

In various embodiments, the window 16 is transparent and can be operably supported by the support plate 14. Further, the window 16 and the support plate 14 can be integrally formed such that one or more windows 16 are integrated within the support plate 14. Likewise, the resin support 26 is also transparent or includes portions that are transparent. As used herein, the terms "transparent" and "radiotransparent" refer to a material that allows at least a portion of radiant energy of a selected wavelength to pass through. For example, the radiant energy that passes through the window 16 and the resin support 26 can be in the ultraviolet spectrum, the infrared spectrum, the visible spectrum, or any other practicable radiant energy. Non-limiting examples of transparent materials include polymers, glass, and crystalline minerals, such as sapphire or quartz.

The resin support 26 extends between the feed module 22 and the take-up module 24 and defines a "resin surface" 30, which is shown as being planar, but could alternatively be arcuate. In some instances, the resin surface 30 may be defined by the resin support 26 and be positioned to face the stage 18 with the window 16 on an opposing side of the resin support 26 from the stage 18. For purposes of convenient description, the resin surface 30 may be considered to be oriented parallel to an X-Y plane of the apparatus 10, and a direction perpendicular to the X-Y plane is denoted as a Z-axis direction (X, Y, and Z being three mutually perpendicular directions). As used herein, the X-axis refers to the machine direction along the length of the resin support 26. As used herein, the Y-axis refers to the transverse direction across the width of the resin support 26 and generally perpendicular to the machine direction. As used herein, the Z-axis refers to the stage direction that can be defined as the direction of movement of the stage 18 relative to the window 16.

The resin surface 30 may be configured to be "non-stick," that is, resistant to adhesion of a cured resin R. The non-stick properties may be embodied by a combination of variables such as the chemistry of the resin support 26, its surface finish, and/or applied coatings. For instance, a permanent or semi-permanent non-stick coating may be applied. One non-limiting example of a suitable coating is polytetrafluoroethylene ("PTFE"). In some examples, all or a portion of the resin surface 30 may incorporate a controlled roughness or surface texture (e.g. protrusions, dimples, grooves, ridges, etc.) with nonstick properties. Additionally or alternatively, the resin support 26 may be made in whole or in part from an oxygen-permeable material.

For reference purposes, an area or volume immediately surrounding the location of the resin support 26 and the window 16 or transparent portion defined by the support plate 14 may be defined as a "build zone," labeled 32.

In some instances, a material depositor 34 may be positioned along the resin support 26. The material depositor 34 may be any device or combination of devices that is operable to apply a layer of resin R on the resin support 26. The material depositor 34 may optionally include a device or combination of devices to define a height of the resin R on the resin support 26 and/or to level the resin R on the resin support 26. Nonlimiting examples of suitable material deposition devices include chutes, rollers, hoppers, pumps, spray nozzles, spray bars, or printheads (e.g. inkjets). In some examples, a doctor blade may be used to control the thickness of resin R applied to the resin support 26 as the resin support 26 passes the material depositor 34.

The resin R includes any radiant-energy curable material, which is capable of adhering or binding together the filler (if used) in the cured state. As used herein, the term "radiant-energy curable" refers to any material which solidifies or partially solidifies in response to the application of radiant energy of a particular frequency and energy level. For example, the resin R may include a photopolymer resin containing photo-initiator compounds functioning to trigger a polymerization reaction, causing the resin R to change from a liquid (or powdered) state to a solid state. Alternatively, the resin R may include a material that contains a solvent that may be evaporated out by the application of radiant energy. The uncured resin R may be provided in solid (e.g. granular) or liquid form, including a paste or slurry.

Furthermore, the resin R can have a relatively high viscosity fluid that will not "slump" or run off during the build process. The composition of the resin R may be selected as desired to suit a particular application. Mixtures of different compositions may be used. The resin R may be selected to have the ability to out-gas or burn off during further processing, such as a sintering process.

Additionally or alternatively, the resin R may be selected to be a viscosity reducible composition. These compositions reduce in viscosity when a shear stress is applied or when they are heated. For example, the resin R may be selected to be shear-thinning such that the resin R exhibits reduced viscosity as an amount of stress applied to the resin R increases. Additionally or alternatively, the resin R may be selected to reduce in the viscosity as the resin R is heated.

The resin R may incorporate a filler. The filler may be pre-mixed with resin R, then loaded into the material depositor 34. Alternatively, the filler may be mixed with the resin R on the apparatus 10. The filler includes particles, which are conventionally defined as "a very small bit of matter." The filler may include any material that is chemically and physically compatible with the selected resin R. The particles may be regular or irregular in shape, may be uniform or non-uniform in size, and may have variable aspect ratios. For example, the particles may take the form of powder, of small spheres or granules, or may be shaped like small rods or fibers.

The composition of the filler, including its chemistry and microstructure, may be selected as desired to suit a particular application. For example, the filler may be metallic, ceramic, polymeric, and/or organic. Other examples of potential fillers include diamond, silicon, and graphite. Mixtures of different compositions may be used. In some examples, the filler composition may be selected for its electrical or electromagnetic properties, e.g. it may specifically be an electrical insulator, a dielectric material, an electrical conductor, and/or magnetic.

The filler may be "fusible," meaning it is capable of consolidation into a mass upon via application of sufficient energy. For example, fusibility is a characteristic of many available powders including but not limited to polymeric, ceramic, glass, and metallic. The proportion of filler to resin R may be selected to suit a particular application. Generally, any amount of filler may be used so long as the combined material is capable of flowing and being leveled, and there is sufficient resin R to hold together the particles of the filler in the cured state.

The stage 18 is a structure defining a planar surface 36, which is capable of being oriented parallel to the resin surface 30 or the X-Y plane. Various devices may be provided for moving the stage 18 relative to the window 16 parallel to the Z-axis direction. For example, as illustrated in FIG. 1, the movement may be provided through an actuator assembly 38 that may be coupled with a static support 40. In some embodiments, the actuator assembly 38 may include a vertical actuator 42 between the stage 18 and the static support 40 that allows for movement of the stage 18 in a first, vertical direction (e.g., along the Z-axis direction). The actuator assembly 38 may additionally or alternatively include a lateral actuator 44 between the stage 18 and the vertical actuator 42 and/or the static support 40 that allows for movement in a second, horizontal direction (e.g., along the X-axis direction). In some embodiments, the vertical actuator 42 may be operably coupled with the lateral actuator 44 such that the stage 18 and vertical actuator 42 move along the lateral actuator 44 simultaneously. The actuator assembly 38 may include any device practicable of moving the stage 18 in the first and/or second direction, such as ballscrew electric actuators, linear electric actuators, pneumatic cylinders, hydraulic cylinders, delta drives, belt systems, or any other practicable device.

The radiant energy device 20 may be configured as any device or combination of devices operable to generate and project radiant energy at the resin R in a suitable pattern and with a suitable energy level and other operating characteristics to cure the resin R during the build process. For example, as shown in FIG. 1, the radiant energy device 20 may include a projector 48, which may generally refer to any device operable to generate a radiant energy patterned image of suitable energy level and other operating characteristics to cure the resin R. As used herein, the term "patterned image" refers to a projection of radiant energy comprising an array of one or more individual pixels. Non-limiting examples of patterned image devices include a DLP projector or another digital micromirror device, a two-dimensional array of LEDs, a two-dimensional array of lasers, and/or optically addressed light valves. In the illustrated example, the projector 48 includes a radiant energy source 50 such as a UV lamp, an image forming apparatus 52 operable to receive a source beam 54 from the radiant energy source 50 and generate a patterned image 56 to be projected onto the surface of the resin R, and optionally focusing optics 58, such as one or more lenses.

The image forming apparatus 52 may include one or more mirrors, prisms, and/or lenses and is provided with suitable actuators, and arranged so that the source beam 54 from the radiant energy source 50 can be transformed into a pixelated image 56 in an X-Y plane coincident with the surface of the resin R. In the illustrated example, the image forming apparatus 52 may be a digital micro-mirror device.

The projector 48 may incorporate additional components, such as actuators, mirrors, etc. configured to selectively move the image forming apparatus 52 or other part of the projector 48 with the effect of rastering or shifting the location of the patterned image 56 on the resin surface 30. Stated another way, the patterned image 56 may be moved away from a nominal or starting location.

In addition to other types of radiant energy devices 20, the radiant energy device 20 may include a "scanned beam apparatus" used herein to refer generally to any device operable to generate a radiant energy beam of suitable energy level and other operating characteristics to cure the resin R and to scan the beam over the surface of the resin R in a desired pattern. For example, the scanned beam apparatus can include a radiant energy source 50 and a beam steering apparatus. The radiant energy source 50 may include any device operable to generate a beam of suitable power and other operating characteristics to cure the resin R. Non-limiting examples of suitable radiant energy sources 50 include lasers or electron beam guns.

In some instances, the apparatus 10 may include a material retention assembly 46 that may be configured to retain the resin support 26 in a predefined position along the support plate. In some instances, the material retention assembly 46 can include one or more pneumatic actuation zones 46a with each pneumatic actuation zone 46a configured to selectively interact with the resin support 26 by producing a force on a surface of the resin support 26 opposite the resin R.

The one or more pneumatic actuation zones 46a may apply a negative pressure on a first surface of the resin support 26 that is opposite to the resin R, or a second side of the resin support 26, to produce a suction or vacuum on the resin support 26. The negative pressure may retain the resin support 26 in a desired position along the support plate 14. The one or more pneumatic actuation zones 46a may also apply a positive pressure on the first surface of the resin support 26 that is opposite to the resin R, or a second side of the resin support 26, to produce a pushing force on the resin support 26. The positive pressure may release the resin support 26 from a component of the apparatus 10, such as the window 16, the material retention assembly 46, etc.

In some examples, the pneumatic actuation zones 46a may be fluidly coupled with a pneumatic assembly 46b through various hoses and one or more ports. The pneumatic assembly 46b may include any device capable of providing a vacuum/suction and/or pushing a fluid, such as air or a process gas (e.g., nitrogen or argon), through the one or more pneumatic actuation zones 46a. For instance, the pneumatic assembly 46b may include a pressurized fluid source that includes a compressor and/or a blower. The pneumatic assembly 46b may additionally or alternatively include any assembly capable of altering a pressure, such as a venturi vacuum pump. In some embodiments, one or more valves and/or switches may be coupled with the pneumatic assembly 46b and the one or more pneumatic actuation zones 46a. The one or more valves and/or switches are configured to regulate a pressure to each of the one or more pneumatic actuation zones 46a.

In some embodiments, the pneumatic actuation zone 46a that includes one or more apertures 46c of any size and shape for interacting with the resin support 26. For instance, the apertures 46c may be any number and combination of holes, slits, or other geometric shapes defined by any component of the additive manufacturing apparatus 10, such as a portion of the support plate 14. Additionally, or alternatively, the apertures 46c may be defined by a portion of the support plate 14 being formed from a porous material, or through any other assembly in which a fluid may be moved from a first side of the support plate 14 to a second side of the support plate 14 to interact with the resin support 26.

In some examples, the pneumatic actuation zone 46a may be defined by a plenum 46d. The plenum 46d may be of any size and may be similar or varied from the shape of any remaining plenums 46d. In some instances, a gasket may be positioned about a rim of the plenum 46d. Additionally or alternatively, the material retention assembly 46 may include one or more clamps that compressively maintain the resin support 26 along the support plate 14.

With further reference to FIG. 1, a viscosity modification assembly 78 may be integrated within the support plate 14 and/or otherwise operably coupled with the resin support 26. The viscosity modification assembly 78 may be configured to apply a shearing stress to the resin R to alter (e.g., reduce) a viscosity of the resin R. Additionally or alternatively, the viscosity modification assembly 78 may be configured to heat the resin R to alter the viscosity of the resin R. It will be appreciated that in embodiments that heat the resin R to alter the viscosity of the resin R, the heat provided may be within a predefined range that is sufficient to alter the viscosity of the resin R without causing any cross-linking in the polymer.

In some embodiments, the viscosity modification assembly 78 may be configured to mechanically vibrate a portion of the support plate 14 and/or the window 16 to create a shearing stress on the resin R. For example, the viscosity modification assembly 78 may include a movement device (e.g., a transducer) that is operably coupled with the support plate 14. The movement device may be configured to vibrate at least a portion of the support plate 14 or any other module of the apparatus 10 that is then transferred to the resin R. Additionally and/or alternatively, the movement device may be configured to convert electrical energy to ultrasonic mechanical pressure waves that are transferred to the resin R. For instance, the movement device may be in the form of an ultrasonic vibrating device, such as one utilizing a piezoelectric transducer. In other embodiments, the viscosity modification assembly 78, in addition to or in lieu of the transducer, may include, alone or in conjunction with one or the other, a fluid, an acoustic, a motor (e.g., offset cam), a reciprocating piston, or any other movement device.

The movement device may be operably coupled with a computing system 60. The computing system 60 may include a signal generator that supplies an electric impulse to the movement device, the voltage of which can be varied at different frequencies and with different waveshapes. The signal may, for example, be a pure sinusoidal wave or may be modulated with one or more other frequencies. Alternatively, the signal may be a stepped or spiked pulse. In some embodiments, the signal generator transmits a signal of between 20-80 kHz. For example, the signal is at about 60 kHz. The signal generator may, for example, transmit a constant amplitude signal at a constant frequency, or alternate one or both of these parameters. A power level can be selected as a percentage of maximum power.

In other embodiments, the viscosity modification assembly 78 may be configured to create a shearing stress on the resin R through other configurations without departing from the scope of the present disclosure. For example, the viscosity modification assembly 78 may be configured as a probe that may be adjacent and in physical contact with the resin support 26 and/or any other module that may relay the shearing stress to the resin R on the resin support 26. Additionally or alternatively, the viscosity modification assembly 78 may be configured as an ultrasonic or vibration plate that may be operably coupled with the resin support 26 and/or any other module of the apparatus 10 that may provide the shearing stress to the resin R on the resin support 26.

With further reference to FIG. 1, in various embodiments, a gasket 140 may be positioned between the window 16 and the support plate 14 to isolate movement of each of the window 16 and the support plate 14 from one another. In various examples, the gasket 140 may be formed from a motion attenuating material, such as any of a wide variety of resilient elastomers including, but not limited to, materials containing natural rubber and silicone.

Moreover, in various embodiments, the viscosity modification assembly 78 may be configured to target specific locations in the build zone 32. As such, by taking advantage of constructive and destructive wave interference vibration caused by the viscosity modification assembly 78, the apparatus 10 can target specific locations within the build zone 32. In such instances, the gasket 140 may assist in separating the specific locations in the build zone 32.

As provided herein, in some instances, the viscosity modification assembly 78 may additionally or alternatively be capable of producing heat to alter the viscosity of the resin R. For example, fast heating processes, such as dielectric or microwave heating, can be used to avoid exposing the resin R to a long heating cycle before the temperature of use is reached.

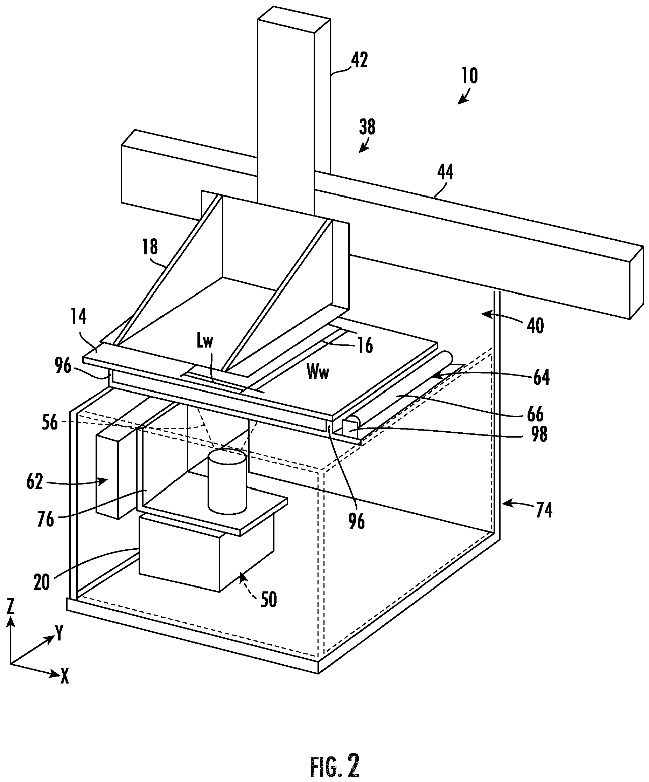

The apparatus 10 may be operably coupled with a computing system 60. The computing system 60 in FIG. 1 is a generalized representation of the hardware and software that may be implemented to control the operation of the apparatus 10, including some or all of the stage 18, the drive system 28, the radiant energy device 20, the actuator assembly 38, the material retention assembly 46, the viscosity modification assembly 78, a movement device 62 (FIG. 2), actuators, and the various parts of the apparatus 10 described herein. The computing system 60 may be embodied, for example, by software running on one or more processors embodied in one or more devices such as a programmable logic controller ("PLC") or a microcomputer. Such processors may be coupled to process sensors and operating components, for example, through wired or wireless connections. The same processor or processors may be used to retrieve and analyze sensor data, for statistical analysis, and for feedback control. Numerous aspects of the apparatus 10 may be subject to closed-loop control.

With further reference to FIG. 1, in some embodiments, a peeling device 64 may be positioned downstream of the window 16. The peeling device 64 may be configured to assist in initiating a separation of the resin support 26 from the component 12 at a predetermined location. For example, in some examples, the peeling device 64 may include one or more rollers 66 that direct the resin support 26 in a varied direction downstream of the roller 66 when compared to a portion of the resin support 26 upstream of the roller 66. The roller 66 may also allow for a change in direction of the resin support 26 while avoiding unnecessary forces on the resin support 26, which may reduce a likelihood that the resin support 26 may tear while interacting with the peeling device 64.

Optionally, the components of the apparatus 10 may be surrounded by a housing 68, which may be used to provide a shielding or inert gas (e.g., a "process gas") atmosphere using gas ports 70. Optionally, pressure within the housing 68 could be maintained at a desired level greater than or less than atmospheric. Optionally, the housing 68 could be temperature and/or humidity controlled. Optionally, ventilation of the housing 68 could be controlled based on factors such as a time interval, temperature, humidity, and/or chemical species concentration. In some embodiments, the housing 68 can be maintained at a pressure that is different than an atmospheric pressure.

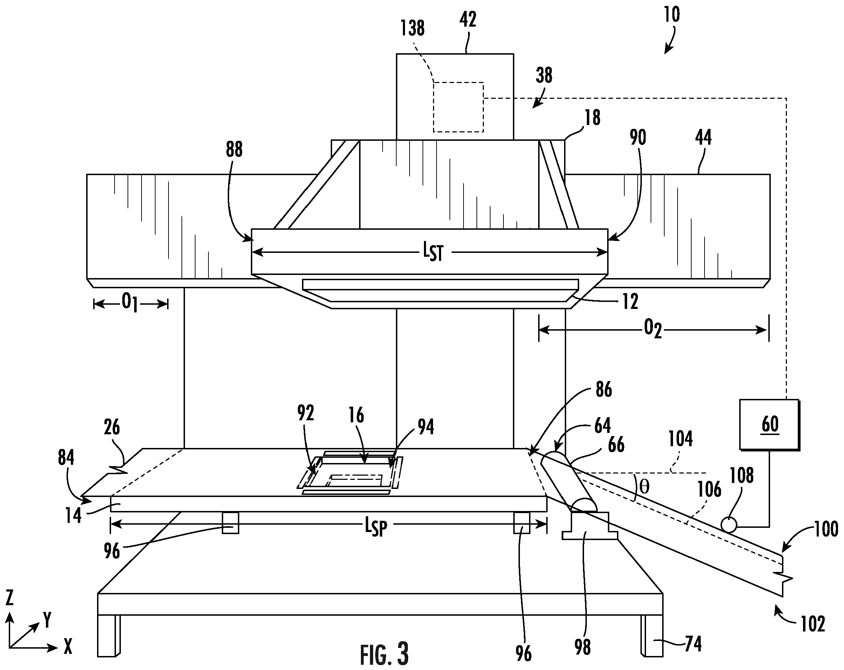

Referring to FIGS. 2 and 3, front perspective views are provided of various additive manufacturing apparatuses 10 including the actuator assembly 38 and the peeling device 64 in accordance with exemplary embodiments of the present disclosure. The exemplary apparatus 10 may include a base structure 74 and a static support 40 extending from the base structure 74. A radiant energy device 20 may be positioned within the base structure 74. In the illustrated embodiments, the radiant energy device 20 may include a radiant energy source 50 operable to generate a patterned image 56 to be projected onto the surface of the resin R through the window 16.

As an option, the radiant energy device 20 may be coupled with an image movement device 62 through a bracket 76. The movement device 62 may include actuators, mirrors, etc. that are configured to selectively raster or shift the location of a patterned image 56 relative to the window 16. Stated another way, the patterned image 56 may be moved away from a nominal or starting location. This permits a single radiant energy device 20 to cover a larger build area, for example. This type of image projection may be referred to herein as a "tiled image".

In some examples, the image movement device 62 can allow for the radiant energy device 20 to translate in a Y-axis direction. As the radiant energy device 20 may be moved relative to the window 16 along the Y-axis direction, the window 16 may have a width *w_{w}* of a first distance and a length *l_{w}* of a second distance. The width *w_{w}* may be generally equal to a movement distance of the radiant energy device 20 plus a width of the projected image generated by the radiant energy device 20. The second length *l_{w}* may be generally equal to a length of the projected image generated by the radiant energy device 20. Accordingly, in some instances, the width *w_{w}* may be greater than the length *l_{w}*. However, it will be appreciated that the radiant energy device 20 may be capable of moving in any practicable direction and/or multiple directions.

Additionally or alternatively, the apparatus 10 may include a plurality of radiant energy devices 20 that are operably coupled with the build zone 32. Each of the plurality of radiant energy devices 20 may be configured to translate below the window 16 and/or the support plate 14. Moreover, each of the plurality of radiant energy devices 20 may generate an image 56 that at least partially overlaps with an image 56 of an additional radiant energy device to form a stitched image on the resin R. In various embodiments, the images 56 from each of the plurality of radiant energy devices 20 may have some degree of overlap where that overlap is a single pixel, less than one pixel (for example, half a pixel), or more than one pixel. Further, in some embodiments, optics 58 (FIG. 1) may be optically coupled with the one or more radiant energy devices 20. In such instances, at least one of the one or more radiant energy devices 20 and/or the optics 58 may translate along the Y-axis and/or otherwise move through the movement device 62 to produce patterned images 56 on various portions of the resin support 26.

The radiant energy device 20 cures various portions of the resin to form a layer 72 (FIG. 1) of the component 12 by emitting one or more discrete patterned images 56 with movement of the radiant energy device 20 between each patterned image 56 that can be stitched to create the predefined layer geometry. As provided above, in various embodiments, the images 56 from the radiant energy device 20 may have some degree of overlap where that overlap is a single pixel, less than one pixel (for example, half a pixel), or more than one pixel. Additionally or alternatively, the radiant energy device 20 may be capable of performing a scanning process in which the consecutive patterned images 56 are emitted from the radiant energy device 20 as the radiant energy device 20 is translated along the movement device 62.

With further reference to FIGS. 2 and 3, the actuator assembly 38 is operably coupled with the static support 40 and is configured to change a position of the stage 18. However, it will be appreciated that the actuator assembly 38 may be operably coupled with any other component without departing from the scope of the present disclosure.

As illustrated, the actuator assembly 38 includes a lateral actuator 44 operably coupled with the static support 40. Moreover, the vertical actuator 42 may be operably coupled with and moveable along the lateral actuator 44. The stage 18 may be operably coupled with the vertical actuator 42. As such, when the stage 18 is moved along the X-axis direction, the vertical actuator 42 and the stage 18 may move in conjunction with one another. When the stage 18 is moved in the Z-axis direction, the stage 18 moves along the vertical actuator 42. However, in other embodiments, the stage 18 and the lateral actuator 44 may move along the vertical actuator 42 in the Z-axis direction and the stage 18 may move along the lateral actuator 44 when the stage 18 is to be moved along the X-axis direction.

In the illustrated embodiment, the lateral actuator 44 may extend beyond the support plate 14 by a first offset distance *O₁* in an X-axis direction on a first side portion 84 of the support plate 14. Likewise, the lateral actuator 44 may extend beyond the support plate 14 by a second offset distance *O₂* in an X-axis direction on a second side portion 86 of the support plate 14. In some embodiments, the second offset distance *O₂* may be greater than the first offset distance *O₁*. In other embodiments, the second offset distance *O₂* may be less than and/or generally equal to the first offset distance *O₁*. For example, in one non-limiting example, the first offset distance *O₁* may be between about 0 and 6 inches (in), .25 in and 4 in, and/or any other practicable distance. Conversely, the second offset distance *O₂* may be between 0 in and 24 in, 1 in and 18 in, and/or any other practicable distance.

Moreover, as illustrated in FIGS. 2 and 3, in some embodiments, a length *lₛₚ* of the support plate 14 may be defined between the first and second side portions 84, 86 of the support plate 14 in the X-axis direction. A length *lₛₜ* of the stage 18 may be defined between a first edge portion 88 and a second edge portion 90 of the stage 18 in the X-axis direction. Further, a length *l_{w}* of the window 16 may be defined between a first edge portion 92 and a second edge portion 94 of the window 16 in the X-axis direction. In some instances, the length *lₛₚ* of the support plate 14 may be greater than the length *lₛₜ* of the stage 18. In several embodiments, when the second edge portion 90 of the stage 18 is generally proximate with the second edge portion 94 of the window 16, the first side portion 84 of the support plate 14 may be proximate with the first edge portion 88 of the stage 18 in the Z-axis direction and/or the first side portion 84 of the support plate 14 extends outwardly of the first end portion of the stage 18. Moreover, when the first edge portion 88 of the stage 18 is proximate with the first edge portion 92 of the window 16, the second side portion 86 of the support plate 14 may be proximate with the second edge portion 90 of the stage 18 in the Z-axis direction and/or the second side portion 86 of the support plate 14 extends outwardly of the first edge portion 88 of the stage 18.

As illustrated in FIGS. 2 and 3, in some instances, the support plate 14 may be positioned above the base structure 74 through one or more stand-offs 96. The stand-offs 96 may be formed through any structure and/or a varied thickness of the support plate 14 from one segment thereof to another. Similarly, in some embodiments, the peeling device 64 may include one or more braces 98 that is configured to retain a portion of the peeling device 64, such as the roller 66, in an offset orientation relative to the base structure 74. For example, in some examples, the brace 98 may be operably coupled with the support plate 14, the base structure 74, the static support 40, and/or in any other practicable location and configured to retain the roller 66. In several embodiments, the peeling device 64 may be coupled with the brace 98 on one side portion thereof and the static support 40 on an opposing second side portion of the peeling device 64.

As provided herein, in some embodiments, the resin R may be deposited on a first surface 100 of the resin support 26 and the roller 66 may be configured to contact a second, opposing surface 102 of the resin support 26. The roller 66 may assist in redirecting the resin support 26 from a first axis 104 (e.g., a support plate axis) that is generally parallel to the X-axis to a second axis 106 (e.g., a separation axis) that is offset from the first axis 104 by a separation angle θ. Additionally or alternatively, any other structure may be utilized to form the separation angle θ. In various examples, the separation angle θ may be any angle between 0 degrees (indicating a parallel relationship between the first axis 104 and the second axis 106) to 180 degrees. For instance, the separation angle θ may be between 0 degrees and 90 degrees, 2 degrees and 60 degrees, 5 degrees and 45 degrees, and/or any other practicable range.

In operation, the actuator assembly 38 may simultaneously move the stage 18 and an associated portion of the resin support 26 from an upstream position of the peeling device 64 to a position in which at least a portion of the stage 18 and/or the component 12 are over the peeling device 64 in the Z-axis direction. By translating the stage 18 and the associated portion of the resin support 26 over the peeling device 64 simultaneously, the peeling device 64 may initiate localized or defined separation of the stage 18 and the resin support 26 at the peeling device 64. Moreover, as additional portions of the stage 18 and the resin support 26 move over the peeling device 64, the component 12 operably coupled with the stage 18 and the resin support 26 may be separated proximate to the peeling device 64. The localized separation of the component 12 from the resin support 26 by moving the stage 18 and resin support 26 in conjunction with one another may reduce various separation forces on the component 12 thereby mitigating part breakage among other potential issues.

In some embodiments, the apparatus 10 may further include one or more rotary resin support encoders 108 (visual or sensor), which may be operably coupled with the resin support 26 and can be deployed to measure and determine the movement of the resin support 26. Similarly, in various embodiments, one or more actuator assembly encoders 138 (visual or sensor) may be operably coupled with the actuator assembly 38 and can be deployed to measure and determine the movement of the actuator assembly 38. In operation, the computing system 60 may actuate each of the actuator assembly 38 and the drive system 28 such that the stage 18 and the resin support 26 move simultaneously with one another, e.g. by using one or more suitable timing algorithms.

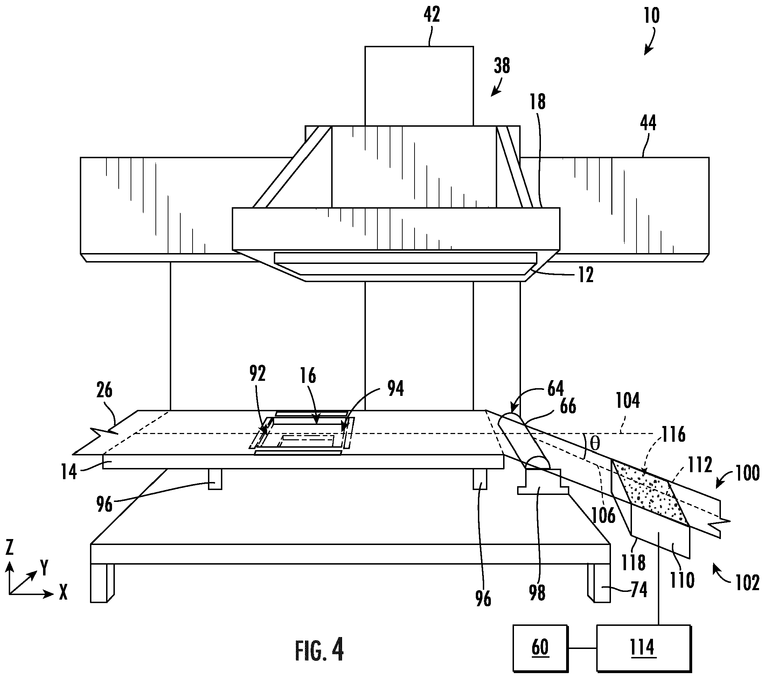

Referring to FIG. 4, a front perspective view of the additive manufacturing apparatus 10 including the peeling device 64 is illustrated in accordance with exemplary embodiments of the present disclosure. As illustrated, the peeling device 64 may include a resin support interaction device 110 and/or be used in conjunction with the material retention assembly 46 integrated into the support plate 14. In various embodiments, the resin support interaction device 110 can include one or more pneumatic actuation zones 112 that is configured to selectively interact with the resin support 26 by producing a force on the second surface 102 of the resin support 26. For example, the one or more pneumatic actuation zones 112 may apply a negative pressure on the second surface of the resin support 26 to produce a suction or vacuum on the resin support 26. Accordingly, the resin support interaction device 110 may be free from contact with the resin R that is on the resin support 26. The negative pressure may retain the resin support 26 in a desired position relative to the base structure 74 and/or the roller 66 as the stage 18 is raised and/or otherwise moved away from the resin support 26. Additionally or alternatively, the one or more pneumatic actuation zones 112 may supply a positive pressure to produce a pushing force on the second surface 102 of the resin support 26. The positive force may be used to detach the resin support 26 from the resin support interaction device 110 and/or reduce a frictional coefficient during movement of the resin support 26 relative to the resin support interaction device 110.

In some examples, the pneumatic actuation zones 112 may be fluidly coupled with a pneumatic assembly 114 through various hoses and one or more ports. The pneumatic assembly 114 may include any device capable of providing a vacuum/suction and/or pushing a fluid, such as air or a process gas (e.g., nitrogen or argon), through the one or more pneumatic actuation zones 112. For instance, the pneumatic assembly 114 may include a pressurized fluid source that includes a compressor and/or a blower. The pneumatic assembly 114 may additionally or alternatively include any assembly capable of altering a pressure, such as a venturi vacuum pump. In some embodiments, one or more valves and/or switches may be coupled with the pneumatic assembly 114 and the one or more pneumatic actuation zones 112. The one or more valves and/or switches are configured to regulate a pressure to each of the one or more pneumatic actuation zones 112.

In various embodiments, the one or more pneumatic actuation zones 112 may define one or more apertures 116 of any size and shape for interacting with the resin support 26. For instance, the apertures 116 may be any number and combination of holes, slits, or other geometric shapes defined by any component of the additive manufacturing apparatus 10, such as a housing 118 of the resin support interaction device 110. Additionally or alternatively, the apertures 116 may be defined by a portion of the housing 118 being formed from a porous material, or through any other assembly in which a fluid may be moved from a first side of the housing 118 to a second side of the housing 118 to interact with the resin support 26.

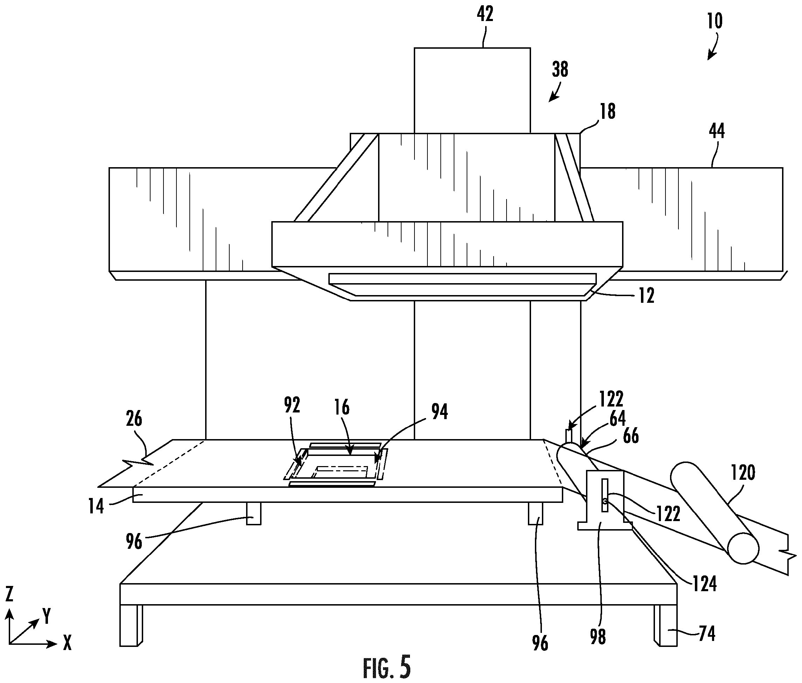

Additionally or alternatively, as illustrated FIG. 5, in some instances, the peeling device 64 may include one or more guides 120 downstream of the roller 66. The one or more guides 120 may be configured to direct the resin support 26 in a predefined direction between the roller 66 and the guides 120. For instance, the guides 120 may be positioned below the roller 66 in the Z-axis direction such that the offset in the Z-axis direction creates the separation angle θ. In some instances, the guides 120 may be rotatable about an axis that is generally parallel to a rotation axis of the roller 66 of the peeling device 64.

With further reference to FIG. 5, in several embodiments, the peeling device 64 may further include an adjustment assembly that allows for movement of various components within the peeling device 64. For example, in the embodiment illustrated in FIG. 5, the adjustment assembly may include a slide 122 positioned within the brace 98 and/or the static support 40. An axle 124 of the roller 66 may be positioned and fixed within the slide 122. To adjust a height of the roller 66, the axle 124 may be released and positioned in a new location within the slide 122 thereby altering a position of the roller 66 in the Z-axis direction. It will be appreciated that the adjustment assembly may include any other assembly that allows for movement of the roller 66 in any direction within the manufacturing apparatus 10.

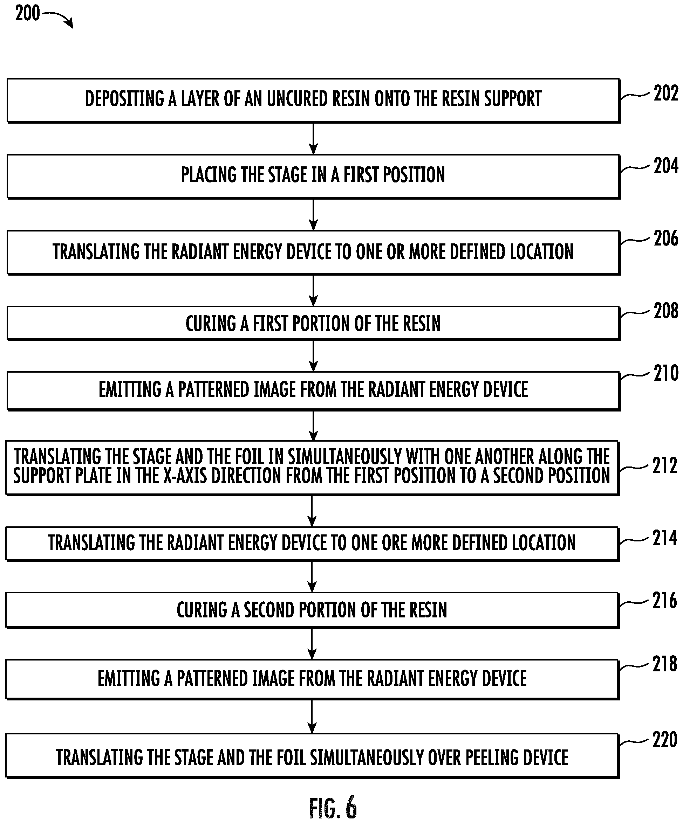

Now that the construction and configuration of the additive manufacturing apparatus 10 having the peeling device 64 have been described according to various examples of the present subject matter, a method 200 for operating an additive manufacturing apparatus 10 is provided in conjunction with illustrations of the various steps in FIGS. 6-11. The method 200 can be used to operate the additive manufacturing apparatus 10 or any other suitable additive manufacturing apparatus 10. It should be appreciated that the example method 200 is discussed herein only to describe example aspects of the present subject matter and is not intended to be limiting. Any of the steps within FIG. 6 may be omitted or rearranged in any other order without departing from the scope of the present disclosure.

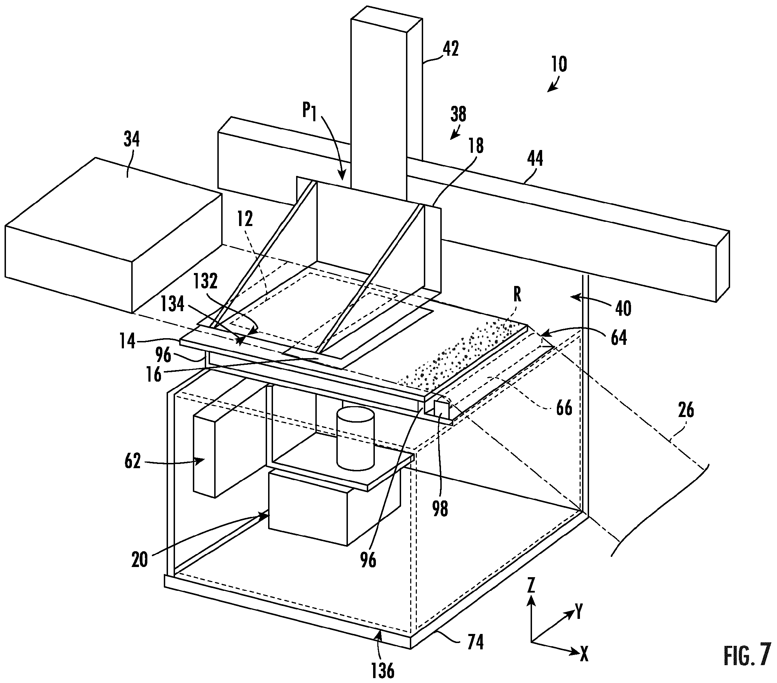

Referring now to FIGS. 6 and 7, the method 200 can include, at step 202, depositing a layer of an uncured resin onto the resin support 26.

As shown in FIGS. 6 and 7, at step 204, the method 200 can include placing the stage 18 in a first position *P₁* by moving the stage 18 in the Z-axis direction and/or an X-axis direction such that a working surface of the stage 18 and/or the component 12 retained by the stage 18 contacts the resin R. Movement of the stage 18 to the first position *P₁* may be accomplished through an actuator assembly 38 that is positioned between the stage 18 and a static support 40. With the stage 18 in the first position *P₁*, the resin support 26 and the stage 18 may be retained in a fixed position relative to one another. For clarity purposes, arrow 132 generally illustrates a consistent location on the stage 18. Likewise, arrow 134 represents a consistent location on the resin support 26.

Next at step 206, the method 200 can include translating the radiant energy device 20 to one or more defined location(s). At step 208, the method 200 can include curing a first portion of the resin with the stage 18 in the first position *P₁* by applying radiant energy from a radiant energy device 20 through the window 16 and the resin support 26. Curing the first portion can include, at step 210, emitting a patterned image 56 (FIG. 1) from the radiant energy device 20 that is transmitted through at least a segment of the window 16.

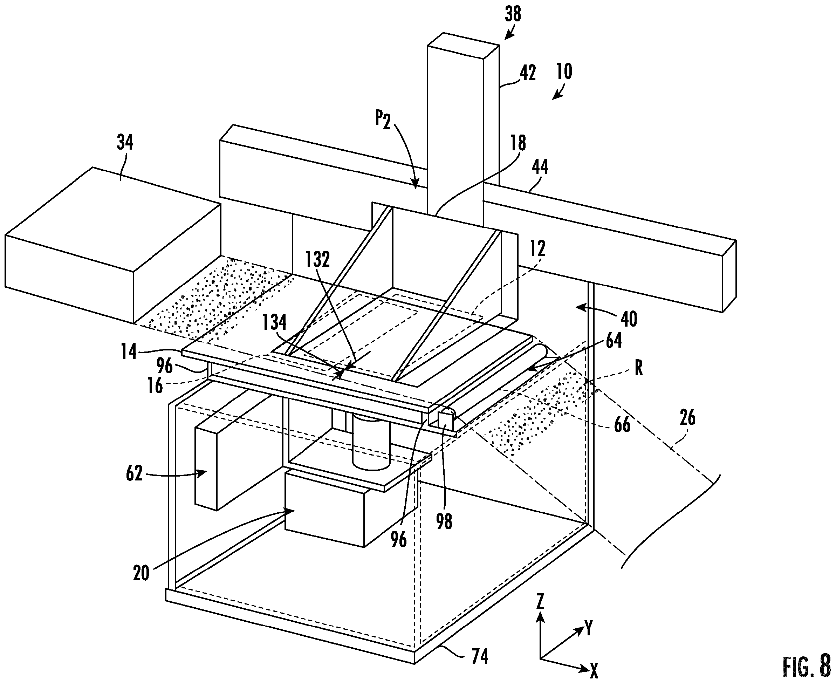

Referring now to FIG. 6 and 8, at step 212, the method 200 can include translating the stage 18 and the resin support 26 simultaneously with one another along the support plate 14 in the X-axis direction from the first position *P₁* to a second position *P₂*. In some embodiments, the first and second positions *P₁*, *P₂* may be offset from one another. As generally illustrated by arrows 132 and 134, the resin support 26 and the stage 18 maintain a fixed position relative to one another as each of the resin support 26 and the stage 18 are translated along the support plate 14. As such, the speed, acceleration, distance, etc. that each of the resin support 26 and the stage 18 are moved at are generally common. Moreover, as the stage 18 and the resin support 26 are translated along the support plate 14 simultaneously with one another, the height of the stage 18 relative to the support plate 14 can be maintained to retain a similar layer increment to that of the resin during steps 202-210.

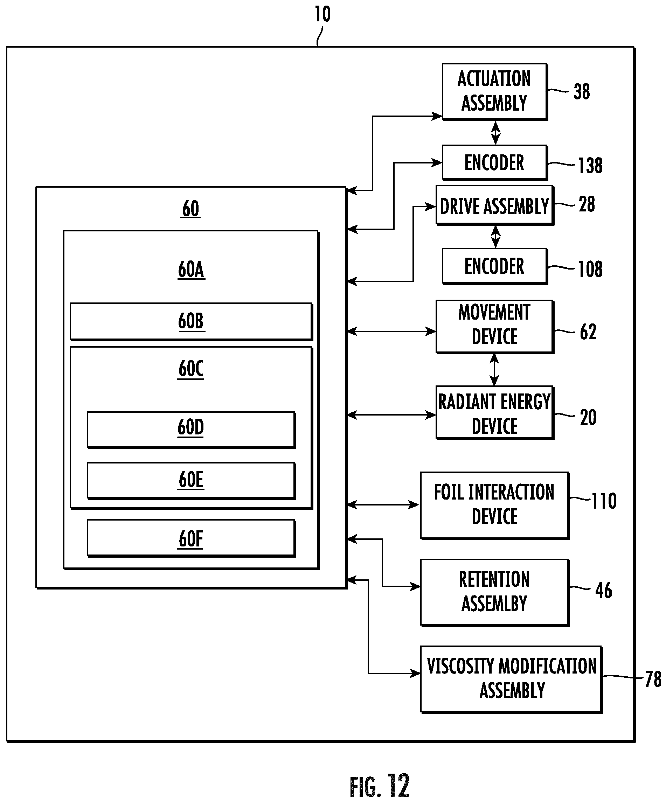

In order to translate the resin support 26 and the stage 18 simultaneously with one another, the drive system 28 (FIG. 12) of the resin support 26 may control movement of the resin support 26 while the actuator assembly 38 controls the movement of the stage 18. As such, the computing system 60 may be operably coupled with both of the drive system 28 and the actuator assembly 38 for controlling movement of each component. Data may be provided from the resin support encoder 108 and/or the actuator assembly encoder 138 to the computing system 60, which, in turn, can alter a movement characteristic of the stage 18 and/or the resin support 26 in order to maintain the position of the components relative to one another.

Next at step 214, the method can include translating the radiant energy device 20 to one or more defined location(s). At step 216, the method can include curing a second portion of the resin with the stage 18 in the second position *P₂* relative to the window 16 by applying radiant energy from a radiant energy device 20 through the window 16 and the resin support 26. Curing the second portion can include, at step 218, emitting a patterned image 56 (FIG. 1) from the radiant energy device 20 that is transmitted through at least a segment of the window 16.

As illustrated in FIGS. 6 and 9-11, once the layer 72 of the component 12 is completed, at step 220, the method 200 includes translating the stage 18 and the resin support 26 simultaneously over the peeling device 64. As such, the stage 18 and the resin support 26 may simultaneously move past the window 16 in the X-axis direction (e.g., partially or fully downstream of the window 16). In some embodiments, the peeling device 64 includes an assembly that contacts the second surface 102 of the resin support 26. Further, as provided herein, a portion of the resin support 26 upstream of the peeling device 64 has a first axis 104, and the resin support 26 downstream of the peeling device 64 has a second axis 106 that is offset from the first axis 104 by the separation angle θ.

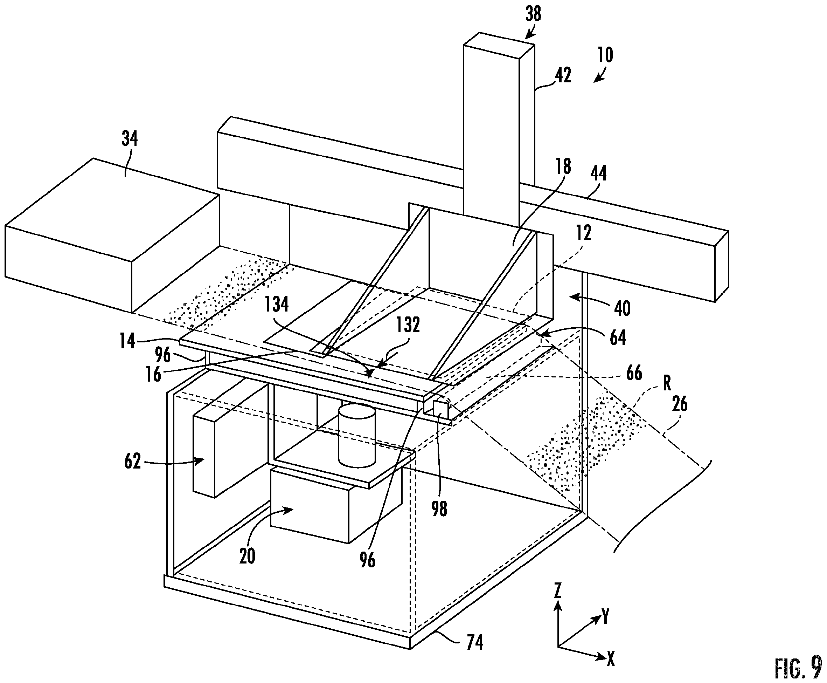

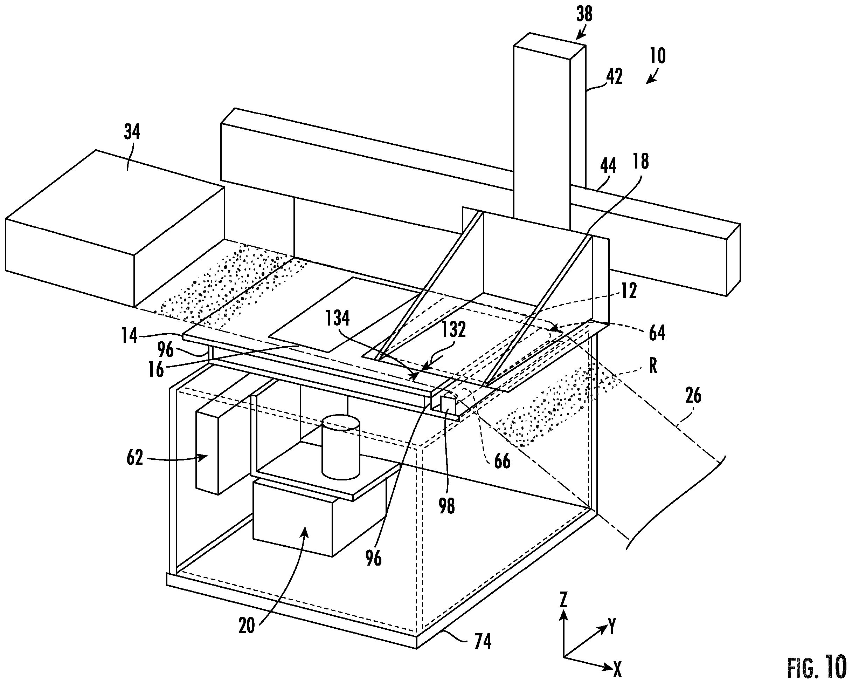

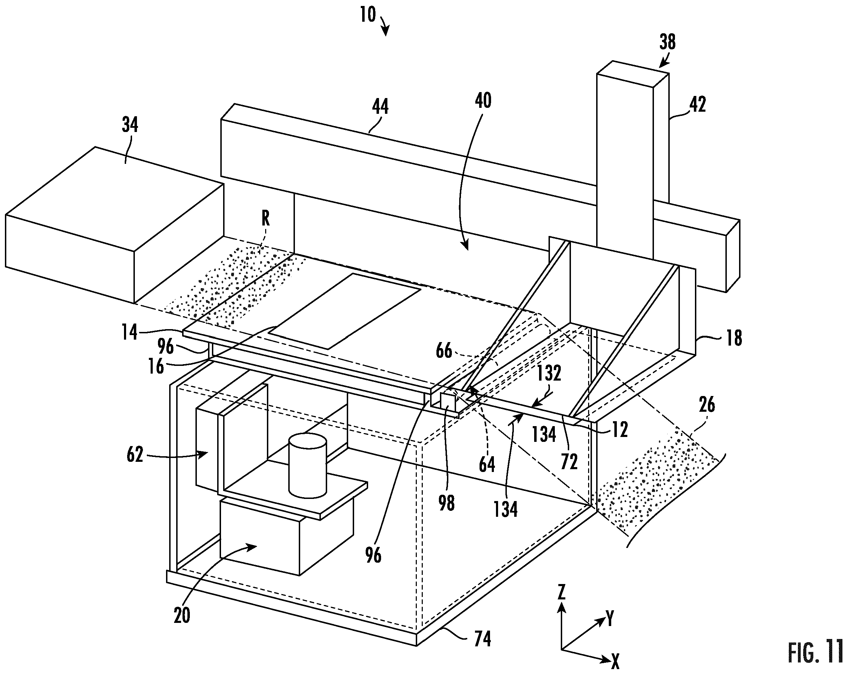

As the stage 18 and the resin support 26 translate over the peeling device 64, the stage 18 and the component 12 provided on the stage 18 continue to move in a direction that is generally parallel to the first axis 104. Conversely, the resin support 26 moves along the second axis 106 causing the resin support 26 and the component 12 to be separated from one another. Based on the component 12 and/or the layer 72 of the component 12, the apparatus 10 may determine that the component 12 is sufficiently released from the resin support 26 such that translation along the peeling device 64 is no longer needed. For example, as illustrated in FIG. 9, in some embodiments, less than half of the stage 18 and the component 12 may be translated over the peeling device 64. Or, as illustrated in FIG. 10, in some embodiments, greater than half (or about half) of the stage 18 and the component 12 may be translated over the peeling device 64. Further, as illustrated in FIG. 11, generally all of the stage 18 and/or the component 12 may be translated over the peeling device 64. Once the component 12 is determined to be safe from breakage or below a predefined probability of predicted breakage, the stage 18 may move away from the resin support 26 in the Z-axis direction.

Once the component 12 and the resin support 26 are separated, a new, second portion of resin is deposited onto the resin support that is then translated into the build zone 32 (FIG. 1). In addition, the stage 18 is moved to a first position *P₁* such that the working surface contacts the second portion of the resin for the next layer 72 of the component 12, which may or may not be the same position as the previous layer. In some instances, when the stage 18 is moved to a subsequent first position *P₁*, which may be the same or different than the previous first position *P₁* and the method 200 may then repeated for each additional layer until the component 12 is complete.

It will be appreciated that the stage 18 and the resin support 26 may move to any number (one or more) positions to form each layer 72 of the component 12 based on the component design. For example, the method 200 in some instances, may include curing a first portion of the resin with the stage 18 and the resin support are in a first position *P₁* relative to the window 16 by applying radiant energy from a radiant energy device 20 through the window 16. The method 200 may also include translating the stage 18 and the resin support simultaneously along the window 16 in an X-axis direction. Lastly, the method 200 may include curing a second portion of the resin with the stage 18 and the resin support in a second position *P₂* relative to the window 16 by applying radiant energy from a radiant energy device 20 through the window 16.

Likewise, the radiant energy device 20 may be translated to any number of locations (one or more) and generate any number of patterned images 56 while positioned in any of the one or more locations. For instance, various methods can include projecting a first patterned image 56 through a first segment of the window 16 defined by a support plate 14, translating the radiant energy device 20 along a Y-axis direction, and projecting a second patterned image 56 through a second segment of the window 16. The stage 18 and the resin support 26 can be positioned in the first position *P₁* while the first patterned image 56 and the second patterned image 56 are projected.

FIG. 11 depicts certain components of computing system 60 according to example embodiments of the present disclosure. The computing system 60 can include one or more computing device(s) 60A which may be used to implement the method 200 such as described herein. The computing device(s) 60A can include one or more processor(s) 60B and one or more memory device(s) 60C. The one or more processor(s) 60B can include any suitable processing device, such as a microprocessor, microcontroller, integrated circuit, an application specific integrated circuit (ASIC), a digital signal processor (DSP), a field-programmable gate array (FPGA), logic device, one or more central processing units (CPUs), graphics processing units (GPUs) (e.g., dedicated to efficiently rendering images), processing units performing other specialized calculations, etc. The memory device(s) 60C can include one or more non-transitory computer-readable storage medium(s), such as RAM, ROM, EEPROM, EPROM, flash memory devices, magnetic disks, etc., and/or combinations thereof.

The memory device(s) 60C can include one or more computer-readable media and can store information accessible by the one or more processor(s) 60B, including instructions 60D that can be executed by the one or more processor(s) 60B. The instructions 60D may include one or more steps of the method 200 described above, such as to execute operations of the actuator assembly 38, the drive system 28, the movement device 62, and/or the radiant energy device 20 of the additive manufacturing apparatus 10 described above. For instance, the memory device(s) 60C can store instructions 60D for running one or more software applications, displaying a user interface, receiving user input, processing user input, etc. In some implementations, the instructions 60D can be executed by the one or more processor(s) 60B to cause the one or more processor(s) 60B to perform operations, e.g., such as one or more portions of methods described herein. The instructions 60D can be software written in any suitable programming language or can be implemented in hardware. Additionally, and/or alternatively, the instructions 60D can be executed in logically and/or virtually separate threads on processor(s) 60B.

The one or more memory device(s) 60C can also store data 60E that can be retrieved, manipulated, created, or stored by the one or more processor(s) 60B. The data 60E can include, for instance, data to facilitate performance of the method 200 described herein. The data 60E can be stored in one or more database(s). The one or more database(s) can be connected to computing system 60 by a high bandwidth LAN or WAN, or can also be connected to the computing system 60 through network(s) (not shown). The one or more database(s) can be split up so that they are located in multiple locales. In some implementations, the data 60E can be received from another device.

The computing system 60 can also include a communication module or interface 60F used to communicate with one or more other component(s) of computing system 60 or the additive manufacturing apparatus 10 over the network(s). The communication interface 60F can include any suitable components for interfacing with one or more network(s), including for example, transmitters, receivers, ports, controllers, antennas, or other suitable components.

As provided herein, the computing system 60 may be operably coupled with one or more of the actuator assembly 38, the drive system 28, the movement device 62, the resin support encoder 108, actuator assembly encoders 138 and/or the radiant energy device 20. The resin support encoder 108 may be used to provide information related to the movement of the resin support 26. The computing system 60 may be configured to control actuation of each of the drive system 28 and the actuator assembly 38 based on the information from the resin support encoder 108. Likewise, the computing system 60 may be operably coupled with the movement device 62 to place the radiant energy device 20 in one or more positions. The information may be provided to the computing system 60, which, in turn, can alter a movement characteristic of the stage 18, the resin support 26, and/or the radiant energy device 20 in order to maintain the locus of the components relative to one another.

It should be appreciated that the additive manufacturing apparatus is described herein only for the purpose of explaining aspects of the present subject matter. In other example embodiments, the additive manufacturing apparatus may have any other suitable configuration and may use any other suitable additive manufacturing technology. Further, the additive manufacturing apparatus and processes or methods described herein may be used for forming components using any suitable material. For example, the material may be plastic, metal, concrete, ceramic, polymer, epoxy, photopolymer resin, or any other suitable material that may be embodied in a layer of slurry, resin, or any other suitable form of sheet material having any suitable consistency, viscosity, or material properties. For example, according to various embodiments of the present subject matter, the additively manufactured components described herein may be formed in part, in whole, or in some combination of materials including but not limited to pure metals, nickel alloys, chrome alloys, titanium, titanium alloys, magnesium, magnesium alloys, aluminum, aluminum alloys, iron, iron alloys, stainless steel, and nickel or cobalt based superalloys (e.g., those available under the name Inconel^{®} available from Special Metals Corporation). These materials are examples of materials suitable for use in the additive manufacturing processes described herein, and may be generally referred to as "additive materials."

Aspects of the invention(s) are provided by the subject matter of the following clauses, which are intended to cover all suitable combinations unless dictated otherwise based on logic or the context of the clauses and/or associated figures and description:

An additive manufacturing apparatus comprising: a support plate supporting a window; a stage configured to hold a component formed of one or more cured layers of a resin; an actuator assembly configured to change a relative position of the stage relative to the support plate; a radiant energy device positioned opposite to the stage such that it is operable to generate and project radiant energy in a pattern; and a peeling device positioned downstream of the window, wherein the actuator assembly is configured to move the stage simultaneously with a resin support over the peeling device in an X-axis direction.

The additive manufacturing apparatus of one or more of these clauses, wherein the actuator assembly includes a lateral actuator configured to move the stage in the X-axis direction and a vertical actuator configured to move the stage in a Z-axis direction.

The additive manufacturing apparatus of one or more of these clauses, further comprising: a drive system configured to control movement of the resin support.

The additive manufacturing apparatus of one or more of these clauses, wherein the drive system is configured to move the resin support along the support plate simultaneously with the movement of the stage.

The additive manufacturing apparatus of one or more of these clauses, wherein the lateral actuator is configured to move the stage from a position upstream of the peeling device to a position in which at least a portion of the stage is downstream of the peeling device.

The additive manufacturing apparatus of one or more of these clauses, wherein a first portion of the resin support is upstream of the peeling device and is configured to translate along a first axis that is generally parallel to the X-axis and a second portion of the resin support is downstream of the peeling device and is configured to translate along a second axis that is offset from the first axis by a separation angle.

The additive manufacturing apparatus of one or more of these clauses, further comprising: a resin support interaction device positioned downstream of the peeling device and configured to provide a force on the resin support.

A method of operating an additive manufacturing apparatus, the method comprising: depositing a first layer of a resin onto a resin support; moving a stage in a Z-axis direction such that a working surface contacts the first layer of the resin; curing a first portion of the resin with the stage and the resin support in a first position relative to a window by applying radiant energy from a radiant energy device through the window; and translating the stage and the resin support along a peeling device in an X-axis direction to separate a component from the resin support.

The method of one or more of these clauses, further comprising: curing a second portion of the resin with the stage and the resin support in a second position relative to the window by applying radiant energy from the radiant energy device through the window.

The method of one or more of these clauses, wherein translating the stage operably coupled with the component and the resin support along the peeling device in the X-axis direction to separate the component from the resin support includes moving the stage from a position upstream of the peeling device to a position in which at least a portion of the stage is downstream of the peeling device.

The method of one or more of these clauses, further comprising: moving the stage away from a support plate in a direction that is generally perpendicular to a movement direction of the resin support once at least a portion of the stage is positioned downstream of the peeling device.

The method of one or more of these clauses, further comprising: translating the stage in a direction generally opposite to the movement direction of the resin support to place the stage at least partially upstream of the peeling device.

The method of one or more of these clauses, further comprising: depositing a second portion of the resin onto the resin support; translating the resin support along the support plate to a position within a build zone; and moving the stage such that the working surface contacts the second portion of the resin.

The method of one or more of these clauses, wherein the peeling device is configured as a roller.

The method of one or more of these clauses, further comprising: applying a pressure to the resin support through a resin support interaction device.

The method of one or more of these clauses, wherein the resin support interaction device is configured to generate a suction along a portion of the resin support downstream of the peeling device.

An additive manufacturing apparatus comprising: a support plate defining a window; a stage configured to hold a component formed from one or more cured layers of a resin; a radiant energy device positioned opposite to the stage such that it is operable to generate and project radiant energy in a pattern; a peeling device positioned downstream of the window, wherein the stage is configured to move simultaneously with a resin support over the peeling device in an X-axis direction; and an actuator assembly configured to move the component in the X-axis direction generally parallel to the support plate and in a Y-axis direction that is generally perpendicular to the X-axis direction.

The additive manufacturing apparatus of one or more of these clauses, wherein a first portion of the resin support is upstream of the peeling device and is configured to translate along a first axis that is generally parallel to the X-axis and a second portion of the resin support is downstream of the peeling device and is configured to translate along a second axis that is offset from the first axis by a separation angle.

The additive manufacturing apparatus of one or more of these clauses, further comprising: a computing system operably coupled with an actuator assembly configured to translate the stage along the support plate and a drive system configured to control movement of the resin support.

The additive manufacturing apparatus of one or more of these clauses, further comprising: a rotary encoder operably coupled with the resin support, the rotary encoder configured to provide information related to movement of the resin support to the computing system, wherein the computing system is configured to simultaneously move the stage and the resin support based on the information.

This written description uses examples to disclose the concepts presented herein, including the best mode, and also to enable any person skilled in the art to practice the present disclosure, including making and using any devices or systems and performing any incorporated methods. The patentable scope of the present disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An additive manufacturing apparatus (10) comprising:
a support plate (14) supporting a window (16);
a stage (18) configured to hold a component (12) formed of one or more cured layers of a resin (R);
an actuator assembly (38) configured to change a relative position of the stage (18) relative to the support plate (14);
a radiant energy device (20) positioned opposite to the stage (18) such that it is operable to generate and project radiant energy in a pattern; and
a peeling device (64) positioned downstream of the window (16), wherein the actuator assembly (38) is configured to move the stage (18) simultaneously with a resin support (26) over the peeling device (64) in an X-axis direction.

2. The additive manufacturing apparatus (10) of claim 1, wherein the actuator assembly (38) includes a lateral actuator (44) configured to move the stage in the X-axis direction and a vertical actuator (42) configured to move the stage in a Z-axis direction.

3. The additive manufacturing apparatus (10) of claim 2, further comprising:
a drive system (28) configured to control movement of the resin support (26).

4. The additive manufacturing apparatus (10) of claim 3, wherein the drive system (28) is configured to move the resin support (26) along the support plate (14) simultaneously with the movement of the stage (18).

5. The additive manufacturing apparatus (10) of any preceding claim, wherein the lateral actuator (44) is configured to move the stage (18) from a position upstream of the peeling device (64) to a position in which at least a portion of the stage (18) is downstream of the peeling device (64).

6. The additive manufacturing apparatus (10) of any preceding claim, wherein a first portion of the resin support (26) is upstream of the peeling device (64) and is configured to translate along a first axis that is generally parallel to the X-axis and a second portion of the resin support (26) is downstream of the peeling device (64) and is configured to translate along a second axis that is offset from the first axis by a separation angle.

7. The additive manufacturing apparatus (10) of any preceding claim, further comprising:
a resin support interaction device (110) positioned downstream of the peeling device (64) and configured to provide a force on the resin support (26).

8. A method of operating an additive manufacturing apparatus (10), the method comprising:
depositing a first layer of a resin (R) onto a resin support (26);
moving a stage (18) in a Z-axis direction such that a working surface contacts the first layer of the resin (R);
curing a first portion of the resin (R) with the stage and the resin support (26) in a first position relative to a window (16) by applying radiant energy from a radiant energy device through the window (16); and
translating the stage (18) and the resin support (26) along a peeling device (64) in an X-axis direction to separate a component from the resin support (26).

9. The method of any preceding claim, further comprising:
curing a second portion of the resin with the stage (18) and the resin support (26) in a second position relative to the window (16) by applying radiant energy from the radiant energy device (20) through the window (16).

10. The method of any preceding claim, wherein translating the stage operably coupled with the component and the resin support (26) along the peeling device (64) in the X-axis direction to separate the component from the resin support (26) includes moving the stage (18) from a position upstream of the peeling device (64) to a position in which at least a portion of the stage is downstream of the peeling device.

11. The method of any preceding claim, further comprising:
moving the stage (18) away from a support plate (14) in a direction that is generally perpendicular to a movement direction of the resin support (26) once at least a portion of the stage (18) is positioned downstream of the peeling device (64).

12. The method of any preceding claim, further comprising:
translating the stage (18) in a direction generally opposite to the movement direction of the resin support (26) to place the stage (18) at least partially upstream of the peeling device (64).

13. The method of any preceding claim, further comprising:
depositing a second portion of the resin (R) onto the resin support (26);
translating the resin support (26) along the support plate (14) to a position within a build zone (32); and
moving the stage (18) such that the working surface contacts the second portion of the resin.

14. The method of any preceding claim, wherein the peeling device (64) is configured as a roller (22A, 24A).

15. The method of any preceding claim, further comprising:
applying a pressure to the resin support (26) through a resin support interaction device (110).
